# FASCICULE DE BREVET EUROPEEN

(11) **EP 4 127 066 B1**
(45) Date de publication et mention de la délivrance du brevet: **13.11.2024**
(21) Numéro de dépôt: 21714205.8
(22) Date de dépôt: 29.03.2021
(51) Int. Cl.: C08L 95/00

(54) **PROCÉDÉ DE FIXATION DE MODULES PHOTOVOLTAÏQUES AU MOYEN D'UN LIANT DE COLLAGE BITUMEUX COMPRENANT UN ORGANOGÉLATEUR**
METHOD FOR FIXING SOLAR MODULES BY MEANS OF A BITUMINOUS ADHESIVE COMPRISING AN ORGANIC GELATOR
VERFAHREN ZUM BEFESTIGEN VON SOLARMODULEN MITTELS BITUMENKLEBERS ENTHALTEND EINES ORGANISCHEN GELBILDNERS

(30) Priorité: 31.03.2020 FR 2003189
(43) Date de publication de la demande: 08.02.2023
(73) Titulaire: TOTALENERGIES ONETECH, 92400 Courbevoie (FR)
(72) Inventeur: MOUAZEN, Mouhamad, 92000 NANTERRE (FR); COLLIAT, Romain, 38300 RUY MONTCEAU (FR); HICKEL, Pierre-emmanuel, 92700 COLOMBES (FR); CASSAGNE, Valerick, 91470 LIMOURS (FR)
(74) Mandataire: Lavoix
(86) Numéro de dépôt international: PCT/EP2021/058072
(87) Numéro de publication internationale: WO 2021/198130

(56) Documents cités:
- FR-A1- 3 024 285

## Description

### DOMAINE TECHNIQUE

La présente invention concerne le domaine des modules photovoltaïques, et plus précisément les modules photovoltaïques légers. Elle concerne également leur procédé de fixation sur toitures notamment.

### ETAT DE L'ART

Les modules solaires photovoltaïques permettent de produire une énergie électrique à partir du rayonnement solaire. Une pluralité d'éléments photovoltaïques (typiquement des cellules ou des couches minces) peuvent constituer la partie active de la technologie. Ils fonctionnent selon le principe de l'effet photoélectrique. Généralement, plusieurs cellules constituées d'un tel élément photovoltaïque sont reliées entre elles dans un module solaire photovoltaïque, et plusieurs modules sont regroupés pour former une installation solaire. Cette installation produit de l'électricité qui peut être consommée sur place ou alimenter un réseau de distribution.

La plupart des modules solaires connus présentent généralement une face avant en verre et un cadre support métallique de sorte qu'un seul module pèse souvent plus de 18 kg voire 30 kg pour certains modèles. Si on y ajoute de plus les structures de support qui sont nécessaires à l'installation des modules photovoltaïques, on arrive à une charge supplémentaire de 15 kg/m² ou plus pour un toit.

Les modules photovoltaïques légers sont plus légers que les modules classiques et peuvent être installés sur des toits de bâtiments industriels ou commerciaux en ajoutant seulement un surpoids faible, permettant ainsi d'équiper des toits, qui du fait de leur grande surface ou de leur structure (ossature bois ou métallique, telle que celle des bâtiments anciens de dimensionnement limité en termes de charge notamment) ne peuvent supporter des charges supplémentaires importantes.

Les modules photovoltaïques légers ont notamment été développées pour équiper les toitures légères, telles que toitures en bacs acier, les toits terrasses, etc... qui ne peuvent être équipées de modules photovoltaïques classiques, trop lourds. Il existe une grande proportion de grandes toitures à faible charge de type toit terrasse étanchées avec une membrane d'étanchéité. Dans certains cas en particulier, les surfaces à équiper doivent préalablement être revêtues de préférence d'une membrane d'étanchéité. Ces membranes d'étanchéité sont généralement des couches bitumineuses, classiquement utilisées, sur lesquelles des modules photovoltaïques légers sont appliqués, typiquement au moyen d'une colle de type butyle.

Les colles de type butyle présentent cependant l'inconvénient d'être onéreuses, et d'avoir des niveaux d'adhésion variables sur les membranes bitumes suivant les additifs utilisés dans le bitume, ce qui induit des préparations de surface supplémentaires.

Il convient donc de mettre à disposition un procédé de fixation alternatif des modules photovoltaïques, notamment les modules légers, sur les membranes d'étanchéité bitumineuses.

EP 2 106 423, EP 3131960 et EP 3081 609 décrivent des liants de collage bitumineux comprenant un ou plusieurs additifs de type organogélateur. Ces liants sont décrits pour le collage de revêtements d'ouvrages et de revêtements, mais aucunement envisagés pour la fixation des modules photovoltaïques notamment.

Ainsi, un but de la présente invention est de fournir un procédé de collage de modules photovoltaïques, notamment de modules flexibles, efficace, avec une résistance à l'arrachement et au décollage améliorée.

### OBJET DE L'INVENTION

Un objet de l'invention concerne l'utilisation d'un liant de collage bitumineux pour fixer des modules photovoltaïques sur un support à équiper, caractérisée en ce que le liant de collage bitumineux comprend de 0.1 à 5% en poids d'au moins un additif organogélateur, choisi parmi les composés suivants ou leurs mélanges :
- les composés de formule (I) :

   R-(NH)nCONH-(X)m-NHCO(NH)n-R' (I)

   les groupements R et R', identiques ou différents, contiennent une chaîne hydrocarbonée saturée ou insaturée, linéaire, ramifiée ou cyclique, comprenant de 1 à 22 atomes de carbone, éventuellement substituée, et comprenant éventuellement des hétéroatomes, des cycles et/ou des hétérocycles ; le groupement X contient une chaîne hydrocarbonée, saturée ou insaturée, linéaire, cyclique ou ramifiée, comprenant de 1 à 22 atomes de carbone, éventuellement substituée, et comprenant éventuellement des hétéroatomes, des cycles et/ou des hétérocycles ;
   n et m sont des entiers ayant une valeur de 0 ou 1 indépendamment l'un de l'autre
- les composés de formule (II)

   Y-(COOH)z (II)

   dans laquelle Y est une chaîne hydrocarbonée linéaire ou ramifiée, saturée ou insaturée comprenant de 4 à 68 atomes de carbone, de préférence de 4 à 54 atomes de carbone, plus préférentiellement de 4 à 36 atomes de carbone et z un entier variant de 1 à 4, de préférence de 2 à 4 ;
- les composés de formule générale (III) :

   Ar1-Z-Ar2 (III)
où Ar1 et Ar2 représentent indépendamment l'un de l'autre un noyau benzène ou un système de noyaux aromatiques condensés de 6 à 20 atomes de carbones, substitués par au moins un groupe hydroxyle, et Z représente un radical divalent éventuellement substitué, dont la chaîne principale comprend de 6 à 20 atomes de carbone et au moins un groupe amide et/ou ester.

L'expression « modules photovoltaïques » est utilisée ici pour faire référence aux panneaux solaires photovoltaïques, et désigne ici les modules permettant de convertir le rayonnement solaire en électricité Lesdits modules peuvent être de différents types et notamment de type avec cadre, sans cadre, léger, verre/verre. De préférence, lesdits modules sont de type flexible.

Les modules flexibles (désignés aussi souples ou semi-rigides) ont la particularité de pouvoir être déformés de sorte qu'ils ne se fissurent pas lorsqu'on applique une courbure avec un rayon de courbure inférieur à 1 m, notamment environ 0.5 m. Cette capacité à se déformer permet une grande diversité d'utilisation.

Des modules légers sont notamment décrits dans la demande WO 2019/002501, et un procédé de fabrication est notamment rapporté dans EP 3 403 826 et WO 2018/060611.

Par « support à équiper », on entend les toitures et/ou murs d'ouvrages de travaux publics, génie civil, bâtiments ou structures fixes ou mobiles, telles que les toits, toits terrasses, abris, stations-services, caravanes etc.

De préférence, l'invention vise notamment l'équipement de toitures légères, c'est-à-dire de supports qui du fait de leur dimensionnement, forme et/ou résistance à la charge ne peuvent être équipées de modules photovoltaïques classiques L'invention peut aussi être appliquée où l'installation doit être fine pour des raisons de prise au vent ou encore pour des raisons de discrétion par exemple des sites protégés dans les plans d'urbanisme.

Selon un mode de réalisation, les modules peuvent être appliqués directement sur lesdits supports. Selon un mode de réalisation, les modules peuvent être appliqués sur une membrane d'étanchéité, disposée entre ledit support et ledit module : selon ce mode de réalisation, ledit liant est utilisé pour fixer ledit module photovoltaïque à une membrane d'étanchéité elle-même destinée à être appliquée sur ledit support.

Par « membrane d'étanchéité », on vise tout système d'étanchéité préfabriqué utilisé principalement pour étanchéifier les ouvrages de travaux publics, de génie civil ou de bâtiments, par exemple les toitures des bâtiments, les balcons, les loggias, etc...Une membrane est généralement constituée d'une armature, éventuellement enrobée de bitume, et peut être monocouche, ou multicouches dans le cas de plusieurs membranes superposées et collées. Il s'agit généralement d'un élément souple, mince et continu se présentant couramment sous forme de lés de feutre bitumés, avec ou sans armatures à mailles larges ou sous forme de lés en polyéthylène ou synthétique armé ou non, monocouche ou multicouche (souvent bicouche) en bitume: ce bitume peut être mélangé à des plastomères et des élastomères. Ce type de membrane est couramment utilisé pour un toit terrasse. Les lés superposés sont mis en place à chaud par soudure.

On entend par « liant de collage bitumineux », ou encore désignés ici « liant », des compositions à base de bitume et comprenant un ou plusieurs additifs et/ou adjuvants, qui présentent des propriétés adhésives.

A titre de « liant de collage » convenant à l'invention, on peut citer les liants décrits dans EP 2 106 423, EP 3131960 et EP 3081 609.

A titre de liant de collage, on peut ainsi envisager les compositions comprenant :
- un bitume ;
- au moins un additif organogélateur,
et optionnellement, un adjuvant polymère oléfinique fonctionnalisé par au moins des groupements fonctionnels glycidyle.

Par « organogélateur » au sens de l'invention, on entend une association de plusieurs molécules dites organogélatrices de structure chimique identique ou différente. Dans le bitume, ces molécules organogélatrices sont capables d'établir entre elles des interactions physiques conduisant à une auto-agrégation avec formation d'un réseau supra-moléculaire 3D qui est responsable de la gélification du bitume. L'empilement des molécules organogélatrices résulte dans la formation d'un réseau de fibrilles, immobilisant les molécules du bitume.

Aux températures d'usage, allant de 10 à 60°C, les molécules organogélatrices se lient entre elles de manière non-covalente, notamment par des liaisons hydrogène. Ces liaisons hydrogène disparaissent lorsque le bitume est chauffé à haute température. Ainsi aux températures d'usage, l'organogélateur constitué d'un grand nombre de molécules organogélatrices peut être assimilé à un polymère « supramoléculaire » et confère au bitume ainsi modifié les propriétés d'une composition bitume/polymère classique, notamment au niveau de la dureté. Aux températures d'usage, la gélification due à l'agrégation des molécules organogélatrices, provoque un épaississement du milieu bitumineux, conduisant à une augmentation de la dureté. Le bitume ne s'écoule plus sous son propre poids, sa dureté aux températures d'usage est accrue par rapport au bitume de départ seul sans additif organogélateur. Lorsque la composition bitumineuse est chauffée, les interactions stabilisant l'organogélateur, disparaissent, et le bitume retrouve les propriétés d'un bitume non additivé, la viscosité de la composition bitumineuse à chaud redevient celle du bitume de départ.

Les interactions physiques entre molécules organogélatrices sont diverses et incluent en particulier des interactions du type liaisons hydrogène entre un donneur de liaisons hydrogène D et un accepteur de liaisons hydrogène A, des interactions π entre cycles insaturés, des interactions dipolaires et leurs associations. Les molécules organogélatrices peuvent établir un seul ou plusieurs types d'interactions avec des molécules voisines. L'établissement de l'une ou l'autre de ces interactions sera favorisé par l'architecture des molécules organogélatrices.

Dans le cadre de l'invention, l'organogélateur, constitué de plusieurs molécules organogélatrices, comprend plusieurs groupements capables d'établir des liaisons hydrogène. Pour établir ces liaisons hydrogène, l'organogélateur comprend au moins un accepteur de liaisons hydrogène A, au moins un donneur de liaisons hydrogène D.

Pour pouvoir gélifier et prendre en masse le bitume, l'organogélateur doit être soluble à chaud dans le bitume. Les constituants chimiques principaux du bitume sont les asphaltènes et les maltènes. Les asphaltènes sont des composés notamment hétérocycliques constitués de nombreux noyaux aromatiques et de cycles naphténiques pluricondensés. Les maltènes quant à eux sont principalement constitués de longues chaînes paraffiniques. Par conséquent, l'organogélateur selon l'invention comprend au moins un groupement chimique C compatibilisant l'organogélateur avec les composés chimiques du bitume. Ce compatibilisant C peut comprendre, pris seul ou en mélange, un groupe choisi parmi : au moins une longue chaîne hydrocarbonée compatible avec la fraction maltène du bitume, ou au moins un cycle aliphatique de 3 à 8 atomes, ou au moins un système polycyclique condensé aliphatique, partiellement aromatique ou entièrement aromatique, compatibles avec la fraction asphaltène du bitume, chaque cycle comprenant 5 ou 6 atomes.

La température de rupture TR à laquelle le réseau de liaisons hydrogène disparaît est fonction du nombre et de la force des liaisons créés au sein de l'organogélateur et est par conséquent fonction de la structure chimique des molécules organogélatrices et de la concentration de l'organogélateur dans le bitume. La température de rupture TR est selon l'invention comprise entre 40°C et 120°C. Ces températures ont été déterminées de manière expérimentale par des mesures de température de ramollissement Bille et Anneau telle que définie dans la norme NF EN 1427. Ces températures de rupture ont pu être corrélées à la disparition des liaisons hydrogène grâce à la spectroscopie infrarouge qui a permis de suivre l'évolution de l'intensité des bandes d'absorptions correspondantes aux liaisons hydrogène présentes dans l'organogélateur aux différentes températures de test.

Le ou les additifs organogélateurs peuvent être choisis parmi :
- les composés de formule (I) :

   R-(NH)nCONH-(X)m-NHCO(NH)n-R' (I)

   les groupements R et R', identiques ou différents, contiennent une chaîne hydrocarbonée saturée ou insaturée, linéaire, ramifiée ou cyclique, comprenant de 1 à 22 atomes de carbone, éventuellement substituée, et comprenant éventuellement des hétéroatomes, des cycles et/ou des hétérocycles ;
   le groupement X contient une chaîne hydrocarbonée, saturée ou insaturée, linéaire, cyclique ou ramifiée, comprenant de 1 à 22 atomes de carbone, éventuellement substituée, et comprenant éventuellement des hétéroatomes, des cycles et/ou des hétérocycles ; n et m sont des entiers ayant une valeur de 0 ou 1 indépendamment l'un de l'autre
- les additifs acides de formule (II)

   Y-(COOH)z (II)

   dans laquelle Y est une chaîne hydrocarbonée linéaire ou ramifiée, saturée ou insaturée comprenant de 4 à 68 atomes de carbone, de préférence de 4 à 54 atomes de carbone, plus préférentiellement de 4 à 36 atomes de carbone et z un entier variant de 1 à 4, de préférence de 2 à 4 ;
- les additifs de formule générale (III) :

   Ar1-Z-Ar2 (III)

   où Ar1 et Ar2 représentent indépendamment l'un de l'autre un noyau benzène ou un système de noyaux aromatiques condensés de 6 à 20 atomes de carbones, substitués par au moins un groupe hydroxyle, et Z représente un radical divalent éventuellement substitué, dont la chaîne principale comprend de 6 à 20 atomes de carbone et au moins un groupe amide et/ou ester.

Parmi les organogélateurs de formule (I), on peut notamment citer les dérivés hydrazides répondant aux formules suivantes:
C5H11-CONH-NHCO-C5H11
C9H19-CONH-NHCO-C9H19
C11 H23-CONH-NHCO-C11 H23
C17H35-CONH-NHCO-C17H35
C21H43-CONH-NHCO-C21H43

On peut également citer les diamides, dont une diamide préférée est la N,N'-ethylenedi(stearamide), C17H35-CONH-CH2-CH2-NHCO-C17H35, ou encore les dérivés uréides, dont une urée particulière la 4,4'-bis(dodecylaminocarbonylamino)diphenylmethane (de formule:C12H25-NHCONH-C6H4-CH2-C6H4-NHCONH-C12H25).

Parmi les additifs de formule (II), on peut notamment citer les composés de formule générale HOOC-CwH2w-COOH où w est un entier variant de 4 à 22, de préférence de 4 à 12. Ces additifs acides correspondent à la formule (II) précédente dans laquelle z = 2 et R= CwH2w. Les diacides préférés sont les suivants :
l'acide adipique ou acide 1,6-hexanedioïque avec w = 4 ;
l'acide pimélique ou acide 1,7-heptanedioïque avec w = 5 ;
l'acide subérique ou acide 1,8-octanedioïque avec w = 6 ;
l'acide azélaique ou acide 1,9-nonanedioïque avec w = 7 ;
l'acide sébacique ou acide 1,10-decanedioïque avec w = 8 ;
l'acide undécanedioïque avec w = 9 ;
l'acide 1,2-dodécanedioïque avec w = 10 ;
l'acide tétradécanedioïque avec w = 12.

Ainsi, à titre de liant de collage comprenant l'acide sébacique à titre d'additif organogélateur, on peut notamment citer la composition commerciale ALTEK^{®} ECO²B commercialisée par TOTAL.

Parmi les additifs de formule (III), on peut notamment citer le composé :
2',3-bis[[3-[3,5-di-tert-butyl-4-hydroxyphenyl]propionyl]]propionohydrazide.

Ce composé est disponible commercialement sous la dénomination Irganox^{®} commercialisée par BASF.

Le liant de collage selon l'invention comprend de préférence de 0.1 à 5% en poids d'organogélateur, notamment de 0,3% à 1,5% en poids, préférentiellement de 0,4% à 1%, et encore plus préférentiellement de 0,8% à 1%, par rapport au poids total du liant.

Dans un mode de réalisation, l'adjuvant polymère oléfinique est choisi dans le groupe consistant en :
(a) les copolymères statistiques ou séquencés d'éthylène et d'un monomère choisi parmi l'acrylate de glycidyle et le méthacrylate de glycidyle, comprenant de 50% à 99,7% en masse,
(b) les terpolymères statistiques ou séquencés, d'éthylène, d'un monomère A choisi parmi l'acétate de vinyle et les acrylates ou méthacrylates d'alkyle en C1 à C6, et d'un monomère B choisi parmi l'acrylate de glycidyle et le méthacrylate de glycidyle, comprenant de 0,5% à 40% en masse de motifs issus du monomère A et, de 0,5% à 15% en masse de motifs issus du monomère B, le reste étant formé de motifs issus de l'éthylène ; et
(c) les copolymères résultant du greffage d'un monomère B choisi parmi l'acrylate de glycidyle et le méthacrylate de glycidyle, sur un substrat consistant en un polymère choisi parmi les polyéthylènes, notamment les polyéthylènes basse densité, les polypropylènes, les copolymères statistiques ou séquencés d'éthylène et d'acétate de vinyle et les copolymère statistiques ou séquencés d'éthylène et d'acrylate ou méthacrylate d'alkyle en C1 à C6 , comprenant de 40% à 99,7% en masse d'éthylène, lesdits copolymères greffés comprenant de 0,5% à 15% en masse de motifs greffés issus du monomère B.

Avantageusement, l'adjuvant polymère oléfinique est choisi parmi les terpolymères statistiques ou séquencés d'éthylène, d'un monomère A choisi parmi les acrylates ou méthacrylates d'alkyle en C1 à C6 et d'un monomère B choisi parmi l'acrylate de glycidyle et le méthacrylate de glycidyle, comprenant de 0,5% à 40% en masse de motifs issus du monomère A et, de 0,5% à 15% en masse de motifs issus du monomère B, le reste étant formé de motifs issus de l'éthylène.

Le liant de collage bitumineux selon l'invention comprend de préférence de 0,5% à 5 % en poids d'adjuvant polymère oléfinique, préférentiellement de 0,8% à 2,2%, et encore plus préférentiellement, de 1% à 2%, par rapport au poids total du liant.

Un liant de collage présente avantageusement une température de ramollissement bille et anneau (TBA) élevée ainsi qu'une bonne résistance au fluage afin de permettre une bonne adhérence du revêtement sur son support, en particulier pour les supports inclinés et les revêtements de toiture soumis à des températures élevées (supérieures ou égales à 50°C, voire à 70°C).

Le liant de collage bitumineux peut être caractérisé en ce qu'il présente une température de ramollissement Température Bille-Anneau (TBA) déterminée selon la norme EN 1427 supérieure ou égale à 80°C, de préférence comprise entre 90°C et 120°C. En outre, il peut avantageusement présenter une contrainte maximale avant et après vieillissement de 3 mois à 70°C, comprise entre 1 et 3 MPa.

La fixation des modules selon l'invention peut également être évaluée par un test de traction, par exemple par un essai de pelage. Ce test comprend la traction sur éprouvette, au moyen d'une presse à traction (telle qu'une presse LF Plus (Lloyd Instruments), conduite à une vitesse de traction de 100 mm/mn), et l'évaluation de la force moyenne de pelage, exprimée en N. selon ce test, la force de pelage est typiquement comprise entre 40 et 100 N.

Les liants de collage bitumineux selon l'invention peuvent contenir des bitumes issus de différentes origines. On peut citer tout d'abord les bitumes d'origine naturelle, ceux contenus dans des gisements de bitume naturel, d'asphalte naturel ou les sables bitumineux, et les bitumes provenant du raffinage du pétrole brut.

Les bitumes selon l'invention sont aussi les bitumes provenant du raffinage du pétrole brut. Les bitumes proviennent de la distillation atmosphérique et/ou sous vide du pétrole. Ces bitumes pouvant être éventuellement soufflés, viscoréduits et/ou désasphaltés. Les bitumes peuvent être des bitumes de grade dur ou de grade mou. Les différents bitumes obtenus par les procédés de raffinage peuvent être combinés entre eux pour obtenir le meilleur compromis technique.

Les bitumes utilisés peuvent également être des bitumes fluxés par addition de solvants volatils, de fluxants d'origine pétrolière, de fluxants carbochimiques et/ou de fluxants d'origine végétale.

Les bitumes utilisés peuvent aussi être des bitumes spéciaux comme les bitumes modifiés par ajout de polymères. A titre d'exemples de polymères pour bitume, on peut citer les élastomères tels que les copolymères SB, SBS, SIS, SBS*, SBR, EPDM, polychloroprène, polynorbornène et éventuellement les polyoléfines tels que les polyéthylènes PE, PEHD, le polypropylène PP, les plastomères tels que les EVA, EMA, les copolymères d'oléfines et d'esters carboxyliques insaturés EBA, les copolymères polyoléfines élastomères, les polyoléfines du type polybutène, les copolymères de l'éthylène et d'esters de l'acide acrylique, méthacrylique ou de l'anhydride maléique, les copolymères et terpolymères d'éthylène et de méthacrylate de glycidyle les copolymères éthylène-propylène, les caoutchoucs, les polyisobutylènes, les SEBS, les ABS.

Le bitume peut aussi être un bitume de recyclage. Les bitumes peuvent être des bitumes de grade dur ou de grade mou. Les bitumes selon l'invention ont une pénétrabilité, mesurée à 25°C selon la norme EN 1426, comprise entre 5 et 300 1/10 mm, de préférence entre 10 et 100 1/10 mm, plus préférentiellement entre 30 et 100 1/10 mm.

Dans un mode de réalisation spécifique, le bitume représente de 90 à 99% en poids par rapport au poids total du liant de collage selon l'invention, et plus préférentiellement de 95% à 99% en poids.

Les avantages présentés par les liants de collage selon l'invention sont les suivants :
De très bonnes propriétés de collage, le liant de collage présentant une contrainte maximale avant et après vieillissement de 3 mois à 70°C, supérieure ou égale à 1 MPa, ainsi qu'une TBA élevée supérieure ou égale à 80°C ;
Abaissement de la température de collage due à une viscosité faible, permettant d'éviter l'émission de fumées sur chantier, une baisse de la consommation d'énergie et une réduction du temps d'application ;
Avantage économique : l'utilisation combinée de l'additif et de l'adjuvant polymère oléfinique permet de diminuer significativement la quantité globale d'additif dans le liant de collage, et donc de réduire le coût de fabrication du liant de collage, tout en conservant les mêmes performances de collage.

Avantageusement, l'utilisation selon l'invention concerne le collage de modules photovoltaïques notamment légers, sur un support à équiper.

Le collage selon l'invention permet notamment de maîtriser la température maximale à appliquer sur le module.

Selon un autre objet, la présente invention concerne également un procédé de fixation de module photovoltaïques sur un support à équiper comprenant :
- La pose dudit module sur ledit support, au moyen d'un liant de collage bitumineux,

Ledit procédé étant caractérisé en ce que :
ledit liant comprend au moins un additif organogélateur tel que défini ci-avant, et en ce que
le procédé comprend une étape de chauffage du liant de collage bitumineux au-dessus de sa température de ramollissement lors de l'application dudit module sur ledit support.

On entend par l'expression « température de ramollissement », la température (C°) à partir de laquelle un bitume ou liant bitumineux commence à devenir élastique. Elle fait donc référence au point de ramollissement, et peut être typiquement déterminé par l'essai bille anneau, par exemple selon la méthode décrite selon la norme NF EN1427.

Selon un mode de réalisation, ledit procédé comprend l'étape préliminaire d'application d'une membrane d'étanchéité bitumineuse sur ledit support à équiper. Par conséquent, selon ce mode de réalisation, le module sera appliqué sur la membrane d'étanchéité bitumineuse, au moyen d'un liant de collage bitumineux.

Typiquement, le liant de collage peut être appliqué sur tout ou partie de la surface à appliquer du module. Typiquement, pour les modules avec cadre, le liant peut être appliqué sur toute la surface à appliquer du cadre, c'est-à dire celle destinée à être en contact avec le support à équiper ou la membrane d'étanchéité bitumineuse. Alternativement, il peut être suffisant d'appliquer le liant sur la surface des coins du cadre. Cette application peut être réalisée par tout moyen d'encollage, par exemple au moyen d'un pinceau ou couteau.

Selon un mode de réalisation, ledit liant de collage est préalablement encollé sur la surface à coller dudit module photovoltaïque. Un tel module est appelé ici « module prêt pour fixation » ou « module pré-encollé ».

Ainsi, selon un autre objet, l'invention concerne également un module photovoltaïque prêt pour fixation comprenant sur sa surface à appliquer (destinée par exemple audit support ou à ladite membrane) une couche de liant de collage bitumineux comprenant au moins un additif organogélateur tel que défini ci-avant.

Selon un mode de réalisation alternatif, le module photovoltaïque est préalablement fixé à une membrane d'étanchéité, au moyen dudit liant de collage, ce système pouvant ensuite être fixé sur le support à équiper. Un tel module peut être qualifié ici de « module prêt pour équipement ».

Selon un autre objet, la présente invention concerne donc encore le système comprenant :
- un module photovoltaïque ;
- une membrane d'étanchéité,
- ledit module et ladite membrane étant fixés par encollage du liant de collage bitumineux comprenant au moins un additif organogélateur tel que défini ci-avant.

Selon un mode de réalisation alternatif, ledit liant de collage est appliqué *in situ* sur ladite membrane d'étanchéité et/ou ledit module et/ou ledit support lors de la pose dudit module.

Le procédé selon l'invention peut s'appliquer sur tout type de support, par exemple un support non bitumineux, en particulier du béton, du bois, de l'acier, et un matériau isolant, ou encore sur des empilements collés tels que les empilements isolant/phonique et ou themique/collage/membrane d'étanchéité/collage/module.

Selon un mode de réalisation particulier, la membrane d'étanchéité peut être appliquée par tout procédé connu.

Le procédé de l'invention comprend le chauffage du liant de collage à une température de mise en oeuvre, puis l'application dudit liant de collage à une température d'application, sur le support, et/ou la membrane, et/ou encore sur le module photovoltaïque.

Le procédé de collage du module est avantageusement un procédé de collage à chaud. Avantageusement, les températures de mise en oeuvre et d'application sont inférieures à 190°C, de préférence inférieures à 170°C.

Par exemple, un procédé comprend les étapes successives suivantes :
- Chauffage du liant de collage selon l'invention, à une température de mise en oeuvre inférieure à 190°C, de préférence inférieure à 180°C, plus préférentiellement inférieure ou égale à 160°C, selon tout procédé connu ; avantageusement le chauffage du liant de collage selon l'invention est réalisé à une température supérieure à 100°C, de préférence supérieure à 130°C, plus préférentiellement supérieure à 140°C. Il est entendu que cette température de chauffage du liant vaut pour la mise en oeuvre du chauffage, ainsi que l'application du liant sur le support à équiper et/ou membrane d'étanchéité et/ou module photovoltaïque.
- Application d'une couche dudit liant de collage, d'épaisseur comprise entre 0,1 et 3 mm, de préférence entre 0,5 et 1,5 mm, sur la membrane d'étanchéité.
- Cette application peut être effectuée selon tout procédé connu, par exemple à l'aide d'un arrosoir, d'un couteau plat ou d'un pinceau ;
- Application d'un module photovoltaïque sur la couche de liant de collage sur la membrane d'étanchéité.

Selon une autre variante, un procédé comprend les étapes successives suivantes :
- Chauffage du liant de collage selon l'invention, à une température de mise en oeuvre inférieure à 190°C, de préférence inférieure à 180°C, plus préférentiellement inférieure ou égale à 160°C, selon tout procédé connu,
- Application d'une couche dudit liant de collage, d'épaisseur comprise entre 0,1 et 3 mm, de préférence entre 0,5 et 1,5 mm, sur le module photovoltaïque, à une température d'application inférieure à 190°C, de préférence inférieure à 180°C, plus préférentiellement inférieure ou égale à 160°C, selon tout procédé connu, par exemple à l'aide d'un arrosoir, d'un bac de liant fondu, d'un couteau plat ou d'un pinceau ;
- Application de la face du module photovoltaïque ainsi revêtue.

Il est également entendu que le support à équiper peut être préalablement recouvert d'un isolant thermique, tel qu'une couche d'isolant à base de cellule de verre expansé, une laine de roche ou des polymères expansés ou extrudés.

Il est par ailleurs entendu que le liant de collage tel que décrit ci-avant peut également être utilisé à titre de liant de collage de revêtements d'ouvrages de travaux publics, de génie civil ou de bâtiments, de préférence, de revêtements sols et/ou murs, plus préférentiellement, de revêtements ou membranes d'étanchéité et/ou d'isolation, de panneaux ignifugés, des panneaux isolants thermiques et/ou phoniques et des plaques isolantes de mousses de verre expansé. Selon un mode de réalisation préférentiel, liant de collage peut être utilisé comme liant de collage à chaud de revêtements d'ouvrages de travaux publics, de génie civil ou de bâtiments. Ainsi le liant de collage peut être également utilisé pour fixer :
- le support à équiper et l'éventuelle membrane d'étanchéité ; et/ou
- le support à équiper et l'éventuel isolant thermique, préalablement à la fixation du module et/ou de la membrane d'étanchéité.

Ainsi, un procédé selon l'invention comprend les étapes successives suivantes :
- Chauffage du liant de collage décrit ci-dessus, à une température de mise en oeuvre inférieure à 190°C, de préférence inférieure à 180°C, plus préférentiellement inférieure ou égale à 160°C, selon tout procédé connu. Par exemple, des pains du liant tel que décrit précédemment peuvent être chauffés dans un fondoir jusqu'à la température de mise en oeuvre.
- Application d'une première couche dudit liant, d'épaisseur comprise entre 0,1 et 3 mm, de préférence entre 0,5 et 1,5mm, sur le support à équiper, par exemple le béton de la toiture. Le liant de collage est appliqué à une température d'application inférieure à 190°C, de préférence inférieure à 180°C, plus préférentiellement inférieure ou égale à 160°C, selon tout procédé connu.
- Mise en place de plaques isolantes de mousse de verre expansé sur la première couche de manière à recouvrir le support à équiper d'une couche uniforme isolante.
- Application d'une seconde couche de liant décrit ci-dessus, d'épaisseur comprise entre 0,1 et 3 mm, de préférence entre 0,5 et 1,5 mm, sur la couche de plaques isolantes. La composition bitumineuse est appliquée à une température d'application inférieure à 190°C, de préférence inférieure à 180°C, plus préférentiellement inférieure ou égale à 160°C, selon tout procédé connu.
- Application d'une membrane d'étanchéité ou du module photovoltaïque sur la seconde couche.

Selon un mode de réalisation avantageux, les modules photovoltaïques peuvent être démontés aisément, par décollage. Ce décollage peut être effectué par chauffage de la couche de liant de collage bitumineux qui avait été appliquée pour leur installation. Typiquement, le chauffage peut être réalisé à température supérieure à la température de ramollissement du liant de collage bitumineux. Ce démontage aisé permet notamment de remplacer des modules défectueux ou de démonter facilement l'installation (ensemble des modules) en fin de production.

D'autres buts, caractéristiques et avantages de l'invention apparaîtront des exemples suivants, qui sont donnés à titre purement illustratif et nullement limitatif.

### Figures :

[Fig. 1] La Figure 1 compare le collage sur module flexible avec une colle butyle et celui avec un Liant selon l'invention (Altek^{®} Eco²B)
[Fig. 2] La Figure 2 compare le collage sur module flexible avec une colle butyle et celui avec un Liant selon l'invention (Altek^{®} Eco²B)

### Exemples

Essai de pelage en traction à 180 °C.

La presse de traction utilisée pour ces essais est un modèle LF Plus de la société LLOYD Instruments, équipée avec des mors de serrage adaptés.

La traction sur les éprouvettes se réalise à une vitesse de 100 mm/min. La course maximum de la machine dans cette configuration est de 90 mm.

Les éprouvettes sont conditionnées un minimum d'une heure à 25°C dans une étuve et testées dans l'enceinte climatique de la machine à la même température.

Le logiciel enregistre la courbe résultante et calcule différents paramètres. La force moyenne de pelage entre deux limites exprimée en N peut être ainsi déterminée.

### 1. Echantillons

Les échantillons suivants sont utilisés :

**[Tableau 1]**

| Référence échantillon | Désignation |
|---|---|
| Cell-But (comparatif) | module photovoltaïque flexible Préencollée au butyle |
| Cell'-But (comparatif) | module photovoltaïque semi-flexible Préencollée au butyle |
| Cell | module photovoltaïque flexible |
| Cell' | module photovoltaïque semi-flexible |
| But | Plaque de colle butyle |
| Liant | Liant de collage selon l'invention |

Le liant de collage utilisé est un Altek^{®} Eco²B additive à 1.5% d'acide sébacique. Ses propriétés organogel ont été vérifiées à l'aide d'une mesure de texturométrie à 50°C. La valeur obtenue est de 30 N ce qui est conforme à la valeur attendue sur ce type de formulations.

### 2. Réalisation des essais

### 2.1 Préparation des éprouvettes

Des morceaux de modules photovoltaïques de 4x8 cm ont été découpés : Les modules semi-flexibles sont découpées à la scie à métaux, les modules flexibles peuvent quant à eux être découpés au massicot.

Sur chaque morceau de module photovoltaïque une surface de 4x6 cm est encollée, soit à l'aide de morceaux de colle butyle (But) découpés à la bonne dimension, soit à l'aide du liant de collage (Liant) sur la surface définie précédemment.

Les éprouvettes sont réalisées avec le liant de collage comme décrit ci-dessous :
- Préparation et protection de la surface et des tranches des modules photovoltaïques ;
- Retrait du film protecteur (protection qui empêche le rouleau de membrane de se recollé sur lui-même) sur la partie basse des bandes de membranes d'étanchéité ;
- Préparation et protection de la surface et des tranches de chaque bande de membranes d'étanchéité ; et Pré-assemblage du couple membrane/cellule photovoltaïque et encollage de la zone prévue au liant par coulage du liant sur la membrane d'étanchéité bitumineuse (pour éviter que le coulage du bitume chaud sur le module photovoltaïque ne dégrade les propriétés la cellule) à 150°C;
- Chaque élément a été pesé avant et après collage pour avoir un estimatif précis de l'épaisseur de colle déposée. On observe une épaisseur de colle relativement homogène de réalisation des éprouvettes :

**[Tableau 2]**

| | Réf pour essais | Epaisseur d'Altek^{®} ECO² (mm) |
|---|---|---|
| Cell | A | 1,38 |
| | B | 1,34 |
| | C | 1,22 |
| | D | 1,43 |
| | E | 1,20 |
| | F | 1,20 |
| Cell' | G | 1,37 |
| | H | 1,29 |
| | I | 1,22 |
| | J | 1,28 |
| | K | 1,19 |
| | L | 1,32 |

| | | |
|---|---|---|
| Récapitulatif des épaisseurs de colle Altek^{®} Eco²B pour chaque éprouvette Dans les essais à la colle butyle : l'application est réalisée comme un ruban adhésif double face entre le module photovoltaïque et la membrane bitumineuse | | |

### 2.2 Essais et résultats.

Les éprouvettes sont mises en place dans la presse avant essai de pelage à 180° dans l'enceinte machine régulée à 25°C.

Le tableau ci-dessous résume tous les essais réalisés et le type de décollement observé.

**[Tableau 3]**

| | Référence produits | Type de décollement | Condition d'arrêt de l'essai | Force de pelage (N) | Plage de mesure de Force de pelage |
|---|---|---|---|---|---|
| Cellule Flexible + Butyle | Cell-But (1) | Cohésif | Limite machine | 56,46 | 20-70 mm |
| | Cell-But (2) | Cohésif | Limite machine | 51,03 | 20-70 mm |
| | Cell-But (3) | Cohésif | Limite machine | 46,56 | 20-70 mm |
| | Cell-But (4) | Cohésif | Limite machine | 48,06 | 20-70 mm |
| | Cell-But (5) | Cohésif | Limite machine | 51,29 | 20-70 mm |
| | Cell-But (6) | Cohésif | Limite machine | 50,51 | 20-70 mm |
| Cellule semi-flexible + butyle | Cell'-But (1') | Cohésif | Limite machine | 50,58 | 20-70 mm |
| | Cell'-But (2') | Cohésif | Limite machine | 53,17 | 20-70 mm |
| | Cell'-But (3') | Cohésif | Limite machine | 49,50 | 20-70 mm |
| | Cell-But (4') | Cohésif | Eprouvette qui lâche du mors avant fin essai | 48,43 | 20-45 mm |
| | Cell'-But (5') | Cohésif | Limite machine | 54,10 | 20-70 mm |
| | Cell'-But (6') | Cohésif | Limite machine | 51,41 | 20-70 mm |
| Cellule flexible + Altek^{®} ECO²B | Cell-Liant (A) | Cohésif | Limite machine | 77,33 | 20-70 mm |
| | Cell-Liant (B) | Cohésif | Limite machine | 81,24 | 20-70 mm |
| | Cell-Liant (C) | Cohésif | Limite machine | 86,86 | 20-70 mm |
| | Cell-Liant (D) | Cohésif | Limite machine | 83,84 | 20-70 mm |
| | Cell-Liant (E) | Cohésif | Limite machine | 80,57 | 20-70 mm |
| | Cell-Liant (F) | Cohésif | Limite machine | 77,67 | 20-70 mm |
| Cellule semi-flexible | Cell'-Liant (G) | Mesure impossible éprouvette endommagée | | | |
| | Cell'-Liant (H) | Cohésif | Limite machine | 90,17 | 20-70 mm |
| + Altek^{®} ECO²B | Cell'-Liant (I) | Cohésif | Limite machine | 99,73 | 20-70 mm |
| | Cell'-Liant (J) | Cohésif | Eprouvette qui lâche du mors avant fin essai | 86,36 | 20-65 mm |
| | Cell'-Liant (K) | Cohésif | Limite machine | 84,79 | 20-70 mm |
| | Cell'-Liant (L) | Cohésif | Limite machine | 85,08 | 20-70 mm |

### Synthèse des essais réalisés

Les décollements sont tous de types cohésifs avec un décollement qui a lieu à l'interface colle/membrane.

### [Tableau 4]

**Tableau 4 Récapitulatif des forces moyennes de pelage par couplage de produit**

| | Cell-But | Cell'-Butyle | Cell-Liant | Cell'-Liant |
|---|---|---|---|---|
| Force moyenne de pelage (N) | 50,65 | 51,20 | 81,25 | 89,22 |

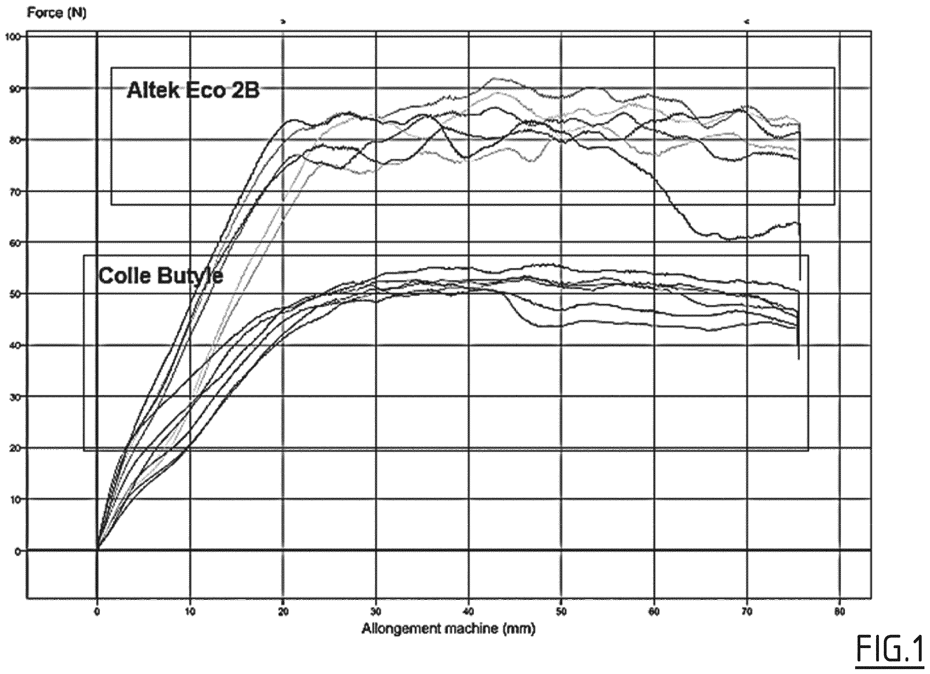

Le tableau ci-dessus et la Figure 1 montrent la différence de performance entre la colle butyle (ensemble de courbes à 50,65 N de moyenne) et la colle Altek^{®} Eco²B (ensemble de courbe à 81.25 N de moyenne) sur des modules flexibles.

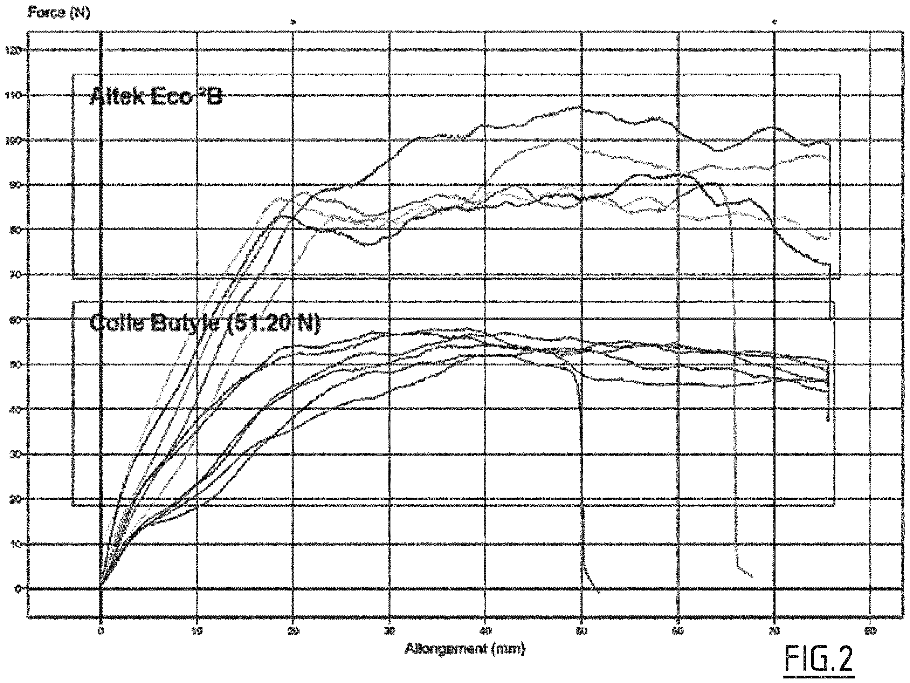

Le tableau ci-dessus et la Figure 2 montrent la différence de performance entre la colle butyle (ensemble de courbes à 51,20 N de moyenne) et la colle Altek^{®} Eco²B (ensemble de courbe à 89.22 N de moyenne) sur des modules semi-flexibles.

Les résultats obtenus démontrent donc qu'indépendamment de la nature du module (flexible ou semi-flexible), le collage des modules photovoltaïques au moyen du liant de collage selon l'invention présente une efficacité supérieure par rapport au collage des modules avec une colle butyle.

## Revendications

1. Utilisation d'un liant de collage bitumineux pour fixer un module photovoltaïque sur un support à équiper, **caractérisée en ce que** le liant de collage bitumineux comprend de 0.1 à 5% en poids d'au moins un additif organogélateur, choisi parmi les composés suivants ou leurs mélanges :
- les composés de formule (I) :
R-(NH)nCONH-(X)m-NHCO(NH)n-R' (I)
les groupements R et R', identiques ou différents, contiennent une chaîne hydrocarbonée saturée ou insaturée, linéaire, ramifiée ou cyclique, comprenant de 1 à 22 atomes de carbone, éventuellement substituée, et comprenant éventuellement des hétéroatomes, des cycles et/ou des hétérocycles ;
le groupement X contient une chaîne hydrocarbonée, saturée ou insaturée, linéaire, cyclique ou ramifiée, comprenant de 1 à 22 atomes de carbone, éventuellement substituée, et comprenant éventuellement des hétéroatomes, des cycles et/ou des hétérocycles ;
n et m sont des entiers ayant une valeur de 0 ou 1 indépendamment l'un de l'autre
- les composés de formule (II)
Y-(COOH)z (II)
dans laquelle Y est une chaîne hydrocarbonée linéaire ou ramifiée, saturée ou insaturée comprenant de 4 à 68 atomes de carbone, de préférence de 4 à 54 atomes de carbone, plus préférentiellement de 4 à 36 atomes de carbone et z un entier variant de 1 à 4, de préférence de 2 à 4 ;
- les composés de formule générale (III) :
Ar1-Z-Ar2 (III)
où Ar1 et Ar2 représentent indépendamment l'un de l'autre un noyau benzène ou un système de noyaux aromatiques condensés de 6 à 20 atomes de carbones, substitués par au moins un groupe hydroxyle, et Z représente un radical divalent éventuellement substitué, dont la chaîne principale comprend de 6 à 20 atomes de carbone et au moins un groupe amide et/ou ester.

2. Utilisation selon la revendication 1, telle que ledit liant est utilisé pour fixer ledit module photovoltaïque à une membrane d'étanchéité destinée à être appliquée sur ledit support.

3. Utilisation selon la revendication 1 ou 2 telle que ledit liant comprend :
- un bitume ;
- au moins un additif organogélateur,
et optionnellement, un adjuvant polymère oléfinique fonctionnalisé par au moins des groupements fonctionnels glycidyle.

4. Utilisation selon l'une quelconque des revendications précédentes, telle que ledit additif organogélateur est choisi parmi Irganox^{®}, l'acide sébacique et leurs mélanges.

5. Procédé de fixation de modules photovoltaïques sur un support à équiper comprenant :
- la pose dudit module, au moyen d'un liant de collage bitumineux,
ledit procédé étant **caractérisé en ce que** :
ledit liant comprend au moins un additif organogélateur tel que défini selon l'une quelconque des revendications précédentes, et **en ce que** le procédé comprend une étape de chauffage du liant de collage bitumineux au-dessus de sa température de ramollissement Bille-Anneau (TBA) déterminée selon la norme EN 1427 lors de l'application dudit module.

6. Procédé selon la revendication 5 tel que ledit procédé comprend en outre, préalablement à l'étape de pose du module, l'étape d'application d'une membrane d'étanchéité bitumineuse sur ledit support à équiper.

7. Procédé selon la revendication 5 ou 6, tel que ledit liant de collage est préalablement encollé sur la surface à coller dudit module photovoltaïque.

8. Procédé selon la revendication 5 ou 6 tel que ledit liant de collage est appliqué *in situ* sur ledit support à équiper ou sur ladite membrane d'étanchéité, préalablement à la pose dudit module.

9. Procédé selon l'une quelconque des revendications 4 à 8 tel que ledit module photovoltaïque est un module léger.

10. Procédé selon l'une quelconque des revendications 4 à 9 tel que ledit support est une toiture légère.

11. Module photovoltaïque prêt pour fixation comprenant sur sa surface à appliquer une couche de liant de collage bitumineux comprenant au moins un additif organogélateur tel que défini selon l'une quelconque des revendications 1 à 4.

12. Système comprenant :
- un module photovoltaïque ;
- une membrane d'étanchéité,
- ledit module et ladite membrane étant fixés par encollage d'un liant de collage bitumineux comprenant au moins un additif organogélateur tel que défini selon l'une quelconque des revendications 1 à 4.

## Patentansprüche

1. Verwendung eines Bitumenklebers zum Befestigen eines Solarmoduls auf einem auszustattenden Träger, **dadurch gekennzeichnet, dass** der Bitumenkleber 0,1 bis 5 Gewichts-% mindestens eines Organogelator-Additivs umfasst, das ausgewählt ist aus den folgenden Verbindungen oder deren Gemischen:
- Verbindungen von Formel (1):
R-(NH)nCONH-(X)m-NHCO(NH)n-R' (I)
wobei die Gruppen R und R', die gleich oder verschieden sind, eine gesättigte oder ungesättigte, geradkettige, verzweigte oder cyclische Kohlenwasserstoffkette umfassend von 1 bis 22 Kohlenstoffatome, optional substituiert und umfassend optional Heteroatome, Cyclen und/oder Heterocyclen
die Gruppe X eine gesättigte oder ungesättigte, geradkettige, cyclische oder verzweigte Kohlenwasserstoffkette umfassend von 1 bis 22 Kohlenstoffatome, optional substituiert und umfassend optional Heteroatome, Cyclen und/oder Heterocyclen
n und m ganze Zahlen sind, die unabhängig voneinander einen Wert von 0 oder 1 aufweisen
- Verbindungen von Formel (II)
Y-(COOH)z (II)
wobei Y eine lineare oder verzweigte, gesättigte oder ungesättigte Kohlenwasserstoffkette umfassend von 4 bis 68 Kohlenstoffatome, vorzugsweise 4 bis 54 Kohlenstoffatome, bevorzugter 4 bis 36 Kohlenstoffatome, und z eine ganze Zahl von 1 bis 4, vorzugsweise 2 bis 4, ist;
- Verbindungen von allgemeiner Formel (III):
Ar1-Z-Ar2 (III)
wobei Ar1 und Ar2 unabhängig voneinander einen Benzolring oder ein System von kondensierten aromatischen Ringen mit 6 bis 20 Kohlenstoffatomen darstellen, die mit mindestens einer Hydroxylgruppe substituiert sind, und Z ein optional substituiertes zweiwertiges Radikal darstellt, dessen Hauptkette 6 bis 20 Kohlenstoffatome und mindestens eine Amid- und/oder Estergruppe umfasst.

2. Verwendung nach Anspruch 1, wobei das Bindemittel verwendet wird, um das Solarmodul an einer Dichtungsmembran zu befestigen, die dazu bestimmt ist, auf den Träger aufgebracht zu werden.

3. Verwendung nach Anspruch 1 oder 2, wobei das Bindemittel Folgendes umfasst:
- ein Bitumen;
- mindestens ein Organogelator-Additiv,
und optional ein olefinisches Polymerhilfsmittel, das mit mindestens funktionellen Glycidylgruppen funktionalisiert ist.

4. Verwendung nach einem der vorherigen Ansprüche, wobei das Organogelator-Additiv ausgewählt ist aus Irganox^{®}, Sebacinsäure und deren Gemischen.

5. Verfahren zur Befestigung von Solarmodulen auf einem auszustattenden Träger, umfassend:
- Verlegen des Moduls mittels eines Bitumenklebers,
wobei das Verfahren **dadurch gekennzeichnet ist, dass**:
das Bindemittel mindestens einen Organogelator-Additiv, wie definiert in einem der vorherigen Ansprüche, umfasst, und dass das Verfahren einen Schritt eines Erhitzens des Bitumenklebers über seinen Erweichungspunkt Ring und Kugel (EP RuK), der gemäß der Norm EN 1427 bestimmt wird, während des Aufbringens des Moduls umfasst.

6. Verfahren nach Anspruch 5, wobei das Verfahren ferner vor dem Schritt eines Anbringens des Moduls den Schritt eines Aufbringens einer bituminösen Dichtungsmembran auf den auszustattenden Träger umfasst.

7. Verfahren nach Anspruch 5 oder 6, wobei das Klebebindemittel zuvor auf die zu verklebende Oberfläche des Solarmoduls aufgeleimt wird.

8. Verfahren nach Anspruch 5 oder 6, wobei das Klebebindemittel vor dem Anbringen des Moduls *in situ* auf den auszustattenden Träger oder auf die Dichtungsmembran aufgebracht wird.

9. Verfahren nach einem der Ansprüche 4 bis 8, wobei das Solarmodul ein leichtes Modul ist.

10. Verfahren nach einem der Ansprüche 4 bis 9, wobei der Träger ein leichtes Dach ist.

11. Solarmodul, bereit zur Befestigung, umfassend auf seiner aufzubringenden Oberfläche eine Schicht aus einem Bitumenkleber, umfassend mindestens ein Organogelator-Additiv, wie definiert nach einem der Ansprüche 1 bis 4.

12. System, umfassend:
- ein Solarmodul;
- eine Dichtungsmembran,
- wobei das Modul und die Membran durch Verkleben eines Bitumenklebers befestigt sind, umfassend mindestens ein Organogelator-Additiv, wie definiert nach einem der Ansprüche 1 bis 4.

## Claims

1. A use of a bituminous adhesive binder for attaching a photovoltaic module to a support to be equipped, **characterized in that** the bituminous adhesive binder comprises from 0.1 to 5% by weight of at least one organogelling additive selected from the following compounds or mixtures thereof:
- the compounds with formula (I):
R-(NH)nCONH-(X)m-NHCO(NH)n-R' (I)
the groups R and R', which can be either identical or different, containing an either saturated or unsaturated, linear, branched or cyclic, hydrocarbon chain comprising from 1 to 22 carbon atoms, possibly substituted, and possibly comprising heteroatoms, rings and/or heterocycles;
The group X containing an either linear, cyclic or branched, saturated or unsaturated, hydrocarbon chain comprising from 1 to 22 carbon atoms, possibly substituted, and possibly comprising heteroatoms, rings and/or heterocycles; n and m are integers with a value of 0 or 1 independently of each other
- The compounds with formula (II)
Y-(COOH)z (II)
wherein Y is an either linear or branched, saturated or unsaturated, hydrocarbon chain comprising from 4 to 68 carbon atoms, preferentially from 4 to 54 carbon atoms, more preferentially from 4 to 36 carbon atoms and z being an integer ranging from 1 to 4, preferentially from 2 to 4;
- the compounds with general formula (III):
AR1-Z-AR2 (III)
wherein AR1 and AR2 represent, independently from each other, either a benzene ring or a condensed aromatic ring system of 6 to 20 carbon atoms substituted by at least one hydroxyl group, and Z represents a possibly substituted divalent radical, the main chain of which comprises from 6 to 20 carbon atoms and at least one amide and/or ester group.

2. The use according to claim 1, wherein said binder is used for attaching said photovoltaic module to a waterproofing membrane intended for being applied to said support.

3. The use according to claim 1 or 2 such that said binder comprises:
- a bitumen;
- at least one organogelling additive,
and optionally, an olefinic polymer additive functionalized with at least glycidyl functional groups.
additive is

4. The use according to any of the preceding claims, wherein said organogelling additive is selected from Irganox^{®}, sebacic acid and mixtures thereof.

5. A method for attaching photovoltaic modules onto a support to be equipped, comprising:
- the laying of said module, using a bituminous adhesive binder,
said method being **characterized in that**:
said binder comprises at least one organogelling additive as defined in any of the preceding claims, and **in that**
the method comprises a step of heating the bituminous adhesive binder above the Ring and Ball softening temperature thereof determined according to the standard NF EN1427 during application of said module.

6. The method according to claim 5, such that said method further comprises, prior to the step of installing the module, the step of applying a bituminous waterproofing membrane to said support to be equipped.

7. The method according to claim 5 or 6, such that said adhesive binder is previously bonded onto the surface to be bonded of said photovoltaic module.

8. The method according to claim 5 or 6, such that said adhesive binder is applied *in situ* onto said support to be equipped or over said waterproofing membrane, prior to the installation of said module.

9. The method according to any of claims 4 to 8, such that said photovoltaic module is a lightweight module.

10. The method according to any of claims 4 to 9, wherein said support is a light roof.

11. A photovoltaic module ready for attaching comprising on the surface thereof to be applied, a layer of bituminous adhesive binder comprising at least one organogelling additive according to any of claims 1 to 4.

12. A system including:
- a photovoltaic module;
- a waterproofing membrane,
- said module and said membrane being attached by bonding the bituminous adhesive binder comprising at least one organogelling additive as defined according to any of claims 1 to 4.
